# EUROPÄISCHE PATENTSCHRIFT

(11) **EP 0 462 356 B1**
(45) Veröffentlichungstag und Bekanntmachung des Hinweises auf die Patenterteilung: **03.11.1993**
(21) Anmeldenummer: 91101333.2
(22) Anmeldetag: 01.02.1991
(51) Int. Cl.: F16D 3/74, F16D 3/76

(54) **Drehelastische Kupplung**
Rotationally elastic coupling
Accouplement élastique rotatif

(30) Priorität: 09.06.1990 DE 4018596
(43) Veröffentlichungstag der Anmeldung: 27.12.1991
(73) Patentinhaber: Firma Carl Freudenberg, 69469 Weinheim (DE)
(72) Erfinder: Andrä, Rainer-Horst, Dr., W-6250 Limburg 5 (DE); Eichhorn, Jürgen, W-6940 Weinheim-Sulzbach (DE)

(56) Entgegenhaltungen:
- EP-A- 0 095 264
- DE-A- 3 716 941
- GB-A- 1 338 502

## Beschreibung

Die Erfindung betrifft eine drehelastische Kupplung für zwei Maschinenelemente, bei der an den Maschinenelementen zwei einander in einem radialen Abstand umschließende Ringe vorgesehen sind, wobei in dem durch den Abstand gebildeten Spalt ein Dämpfungselement aus Gummi und ein Radiallager angeordnet sind, die die Ringe parallel zueinander verbinden.

Eine solche Kupplung gelangt innerhalb des Torsionsschwingungsdämpfers nach dem deutschen Gebrauchsmuster 89 12 387.5 zur Anwendung. Das Dämpfungselement und das Radiallager sind dabei in axialer Richtung nebeneinanderliegend angeordnet, was eine große Baulänge in axialer Richtung bedingt.

Der Erfindung liegt die Aufgabe zugrunde, eine solche Kupplung derart weiter zu entwickeln, daß sich eine Verminderung der axialen Baulänge ergibt.

Diese Aufgabe wird erfindungsgemäß bei einer drehelastischen Kupplung der eingangs genannten Art dadurch gelöst, daß der erste Ring ein in axialer Richtung offenes, U-förmiges Profil aufweist, daß der von dem Profil umschlossene Freiraum zumindest teilweise von dem zweiten Ring in zwei einander zumindest teilweise in radialer Richtung umschließende erste Teilräume unterteilt ist und daß in dem einen Teilraum das Radiallager und in dem anderen Teilraum das Dämpfungselement aufgenommen ist. Das Dämpfungselement und das Radiallager können hierdurch einander in axialer Richtung überlappend angeordnet sein, was eine Verminderung der axialen Baulänge der erfindungsgemäßen Kupplung bedingt.

Dennoch ist eine gute Abstützung der Ringe aufeinander in radialer Richtung gewährleistet, was eine Übertragung von Radialkräften ermöglicht und eine Verwendung innerhalb von Riemenscheiben und/oder von Torsionsschwingungstilgern begünstigt.

Das Dämpfungselement kann zwei einen axialen Abstand voneinander aufweisende Flächen der beiden Ringe verbinden, was eine relativ große Dimensionierung ermöglicht und es gestattet, große Relativverdrehungen zu übertragen.

In Fällen, in denen eine härtere Federkennung erwünscht ist, hat es sich demgegenüber als vorteilhaft bewährt, zwei einen radialen Abstand voneinander aufweisende Flächen der beiden Ringe durch das Dämpfungselement zu verbinden. Dieses ist zweckmäßig rotationssymmetrisch gestaltet und erfährt bei einer solchen Ausbildung zusätzlich eine besonders gute Abstützung gegen fliehkraftbedingte Deformierungen.

Axialkräfte lassen sich während der bestimmungsgemäßen Verwendung in besonders günstiger Weise von dem Radiallager fernhalten, wenn dieses in einer übereinstimmenden Radialebene mit dem Dämpfungselement angeordnet ist. Auch hinsichtlich der aus wirtschaftlichen Gründen häufig angestrebten Baugrößenminimierung resultieren hieraus Vorteile.

Bei Ausführungen, bei denen das Radiallager als Gleitlager ausgebildet ist, resultiert der Vorteil einer besonders geringen Baugröße in radialer Richtung. Steht demgegenüber in radialer Richtung ausreichender Platz zur Verfügung, dann hat sich die Verwendung von Rillen-Kugellagern als vorteilhaft bewährt.

Rillenkugellager sind in einbaufertiger Form erhältlich und gewährleisten neben einer besonders guten Relativverdrehbarkeit der beiden Ringe deren gute Führung und Abstützung in radialer Richtung.

Der zweite Ring kann den ihn radial außenseitig umschließenden Schenkel des Profils des ersten Ringes mit einem Ringvorsprung in einem radialen Abstand umschließen, wobei der durch den Abstand gebildete Spalt durch einen dritten Ring zumindest teilweise in einander radial umschließende, zweite Teilräume unterteilt ist und wobei in dem einen zweiten Teilraum ein zweites Radiallager und in dem anderen zweiten Teilraum ein zweites Dämpfungselement zur drehelastischen Abstützung des dritten Ringes vorgesehen sind. Sämtliche Dämpfungselemente und Radiallager sind hierbei zweckmäßig in einer übereinstimmenden Radialebene angeordnet, wobei die Radiallager und die Dämpfungselemente abwechselnd aufeinanderfolgen können.

Die zuletzt beschriebene Ausführung kann als Kaskadenbauform beschrieben werden. Sie läßt sich bedarfsweise modifizieren durch ergänzende Hinzufügung von weiteren Ringen im Sinne der vorstehenden Darlegungen.

Einige Ausführungsbeispiele der Erfindung werden nachfolgend anhand der Zeichnung beschrieben. Es zeigen:
- Fig. 1: eine drehelastische Kupplung, welche in einem Torsionsschwingungstilger zur Anwendung gelangt und bei der die beiden Ringe durch ein Dämpfungselement verbunden sind, das einen axialen Abstand aufweisende Flächen der Ringe verbindet.
- Fig. 2: eine Ausführung ähnlich Figur 1, bei der das Radiallager durch ein Gleitlager gebildet ist.
- Fig. 3: eine Ausführung ähnlich Figur 2, bei der das Dämpfungselement einen radialen Abstand aufweisende Flächen der beiden Ringe verbindet.
- Fig. 4: eine Kaskadenausführung der Kupplung.

Die gezeigten Kupplungen sind in halbgeschnittener Darstellung wiedergegeben.

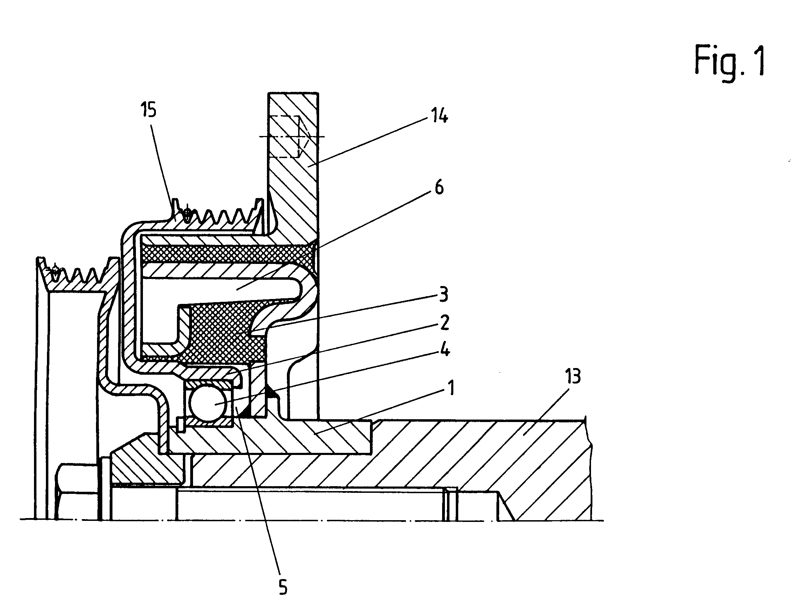

Die in Figur 1 gezeigte Ausführung ist in einen Torsionsschwingungstilger integriert, der am Ende einer Welle 13 befestigt ist und neben einem Trägheitsring 14 eine Riemenscheibe 15 aufweist.

Die drehelastische Kupplung besteht im wesentlichen aus einem ersten Ring 1, der ein in axialer Richtung offenes, U-förmiges Profil aufweist, wobei der von dem Profil umschlossene Freiraum teilweise von einem zweiten Ring 2 in zwei einander teilweise in radialer Richtung umschließende erste Teilräume 5, 6 unterteilt ist. In dem einen Teilraum 5 ist ein Radiallager 4 angeordnet, welches durch ein Rillen-Kugellager gebildet ist und den zweiten Ring 2 auf dem radial innerhalb liegenden Schenkel des Profils des ersten Ringes 1 relativ verdrehbar abstützt. Die einen Bestandteil des zweiten Ringes 2 bildende Riemenscheibe 15 erfährt hierdurch ebenfalls eine Abstützung in radialer Richtung. Sie vermag dadurch unter Vermeidung von radialen Relativverlagerungen in bezug auf die Welle 13 Riemenkräfte aufzunehmen.

In dem anderen Teilraum 6 ist das kreisringförmig ausgebildete Dämpfungslelement 3 angeordnet. Dieses besteht aus gummielastischem Werkstoff und verbindet zwei einen axialen Abstand voneinander aufweisende Flächen des ersten Ringes 1 und des zweiten Ringes 2.

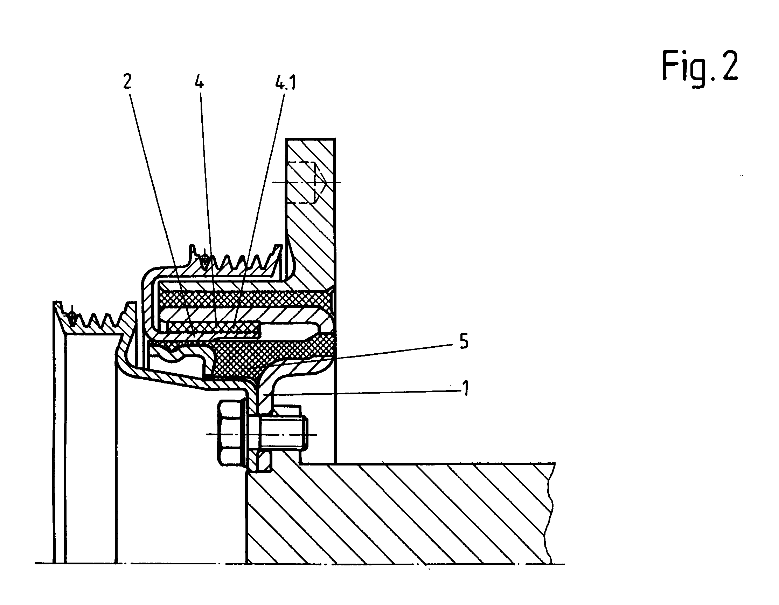

Die in Figur 2 gezeigte Ausführung ist der vorstehend beschriebenen in konstruktiver Hinsicht ähnlich. Anstelle eines Rillen-Kugellagers gelangt bei dieser Ausführung jedoch ein Gleitlager zur Anwendung, bestehend aus einer Lagerbüchse 4.1, welche unverdrehbar auf dem zweiten Ring 2 befestigt ist und die Innenseite des sich in axialer Richtung erstreckenden Schenkels des Profils des ersten Ringes 1 relativ verdrehbar berührt. Der in radialer Richtung benötigte Einbauraum ist dadurch vergleichsweise reduziert.

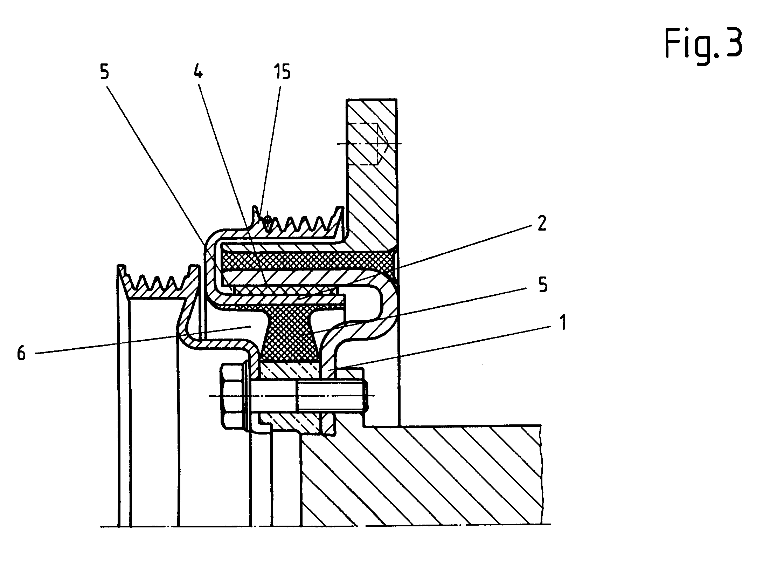

Die in Figur 3 gezeigte Ausführung ist der vorstehend beschriebenen ähnlich. Es gelangt bei dieser Ausführung jedoch ein Dämpfungselement 5 zur Anwendung, welches einander in radialer Richtung umschließende Flächen des ersten Ringes 1 und des zweiten Ringes 2 drehelastisch verbindet. Das Dämpfungselement 5, das Gleitlager 4 und die Riemenscheibe 15 sind in einer übereinstimmenden Radialebene angeordnet. Radialen Relativverlagerungen während der bestimmungsgemäßen Verwendung wird hierdurch begegnet.

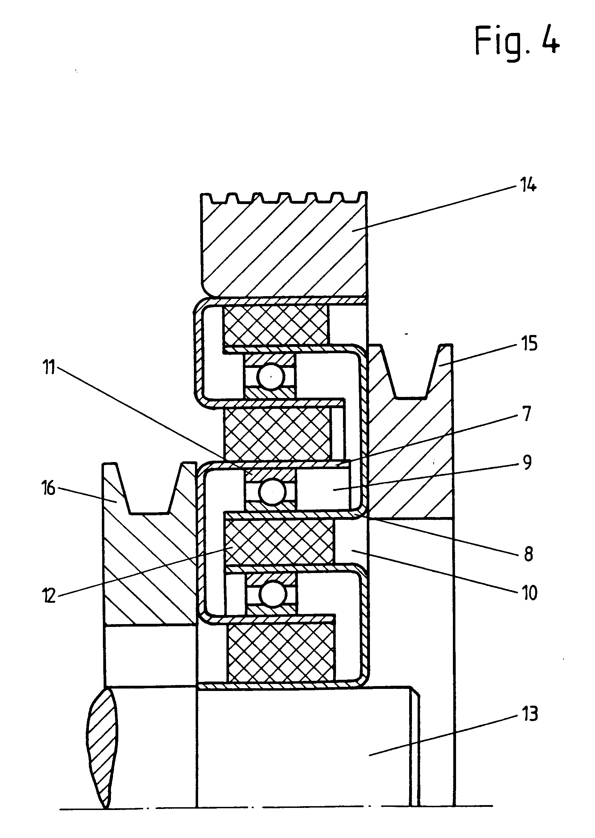

In Figur 4 ist eine Kaskadenbauform der erfindungsgemäßen Kupplung in schematischer Darstellung wiedergegeben. Der zweite Ring umschließt hierbei den ihn radial außenseitig umschließenden Schenkel des Profils des ersten Ringes mit einem Ringvorsprung 7 in einem radialen Abstand, wobei der durch den Abstand gebildete Spalt durch einen dritten Ring 8 zumindest teilweise in einander radial umschließende zweite Teilräume 9, 10 unterteilt ist und wobei in dem einen zweiten Teilraum 9 ein zweites Radiallager 11 und in dem anderen zweiten Teilraum 10 ein zweites Dämpfungselement 12 zur drehelastischen Abstützung des dritten Ringes 8 aufgenommen sind.

Bei der gezeigten Ausführung folgen durchgehend in radialer Richtung aufeinander jeweils ein Dämpfungselement und ein Rillen-Kugellager. Auch bei der Einleitung von Riemenkräften in den Trägheitsring 14 ist hierdurch eine exzentrische Ausweichbewegung in bezug auf die Lage der Achse der Welle 13 so gut wie ausgeschlossen. Des weiteren besteht die Möglichkeit, zusätzliche Trägheitsringe 15, 16 an den Zwischenringen anzubringen und diese gegebenenfalls für die Einleitung von Riemenkräften zu nutzen.

## Patentansprüche

1. Drehelastische Kupplung für ein Maschinenelement, bei der an den Maschinenelementen zwei einander in einem radialen Abstand umschließende Ringe (1,2) vorgesehen sind, wobei in dem durch den Abstand gebildeten Spalt ein Dämpfungselement (3) aus Gummi und ein Radiallager (4) angeordnet sind, die die Ringe (1,2) parallel zueinander verbinden, dadurch gekennzeichnet, daß der erste Ring (1) ein in axialer Richtung offenes, U-förmiges Profil aufweist, daß der von dem Profil umschlossene Freiraum zumindest teilweise von dem zweiten Ring (2) in einander zumindest teilweise in radialer Richtung umschließende erste Teilräume (5, 6) unterteilt ist und daß in dem einen Teilraum (5) das Radiallager (4) und in dem anderen Teilraum (6) das Dämpfungselement (3) aufgenommen ist.

2. Drehelastische Kupplung nach Anspruch 1, dadurch gekennzeichnet, daß das Dämpfungselement (3) zwei einen axialen Abstand voneinander aufweisende Flächen der beiden Ringe (1, 2) verbindet.

3. Drehelastische Kupplung nach Anspruch 1, dadurch gekennzeichnet, daß das Dämpfungselement (3) zwei einen radialen Abstand voneinander aufweisende Flächen der beiden Ringe (1, 2) verbindet.

4. Drehelastische Kupplung nach Anspruch 3, dadurch gekennzeichnet, daß das Dämpfungselement (5) und das Radiallager (4) in einer übereinstimmenden Radialebene angeordnet sind.

5. Drehelastische Kupplung nach Anspruch 1 bis 4, dadurch gekennzeichnet, daß das Radiallager (4) als Gleitlager ausgebildet ist.

6. Drehelastische Kupplung nach Anspruch 1 bis 4, dadurch gekennzeichnezt, daß das Radiallager (4) als Rillenkugellager ausgebildet ist.

7. Drehelastische Kupplung nach Anspruch 1 bis 5, dadurch gekennzeichnet, daß der zweite Ring (2) den ihn radial außenseitig umschließenden Schenkel des Profils des ersten Ringes (1) mit einem Ringvorsprung in einem radialen Abstand umschließt, daß der durch den Abstand gebildete Spalt durch einen dritten Ring (8) zumindest teilweise in einander radial umschließende zweite Teilräume (9, 10) unterteilt ist und daß in dem einen zweiten Teilraum (9) ein zweites Radiallager (10) und in dem anderen zweiten Teilraum (10) ein zweites Dämpfungselement (12) zur drehelastischen Abstützung des dritten Ringes (8) vorgesehen sind.

## Claims

1. A torsionally elastic coupling for a machine element, in which two rings (1, 2) enclosing one another with a radial spacing are provided on the machine elements, a rubber damping element (3) and a radial bearing (4) being arranged in the gap formed by the spacing and connecting the rings (1, 2) parallel to one another, characterised in that the first ring (1) has a U-shaped profile which is open in an axial direction, in that the free space enclosed by the profile is subdivided at least partly by the second ring (2) into first part-spaces (5, 6) which enclose one another at least partly in the radial direction and in that the radial bearing (4) is accommodated in one part-space (5) and the damping element (3) in the other part-space (6).

2. A torsionally elastic coupling according to claim 1, characterised in that the damping element (3) connects two surfaces of the two rings (1, 2), which surfaces have an axial spacing from one another.

3. A torsionally elastic coupling according to claim 1, characterised in that the damping element (3) connects two surfaces of the two rings (1, 2), which surfaces have a radial spacing from one another.

4. A torsionally elastic coupling according to claim 3, characterised in that the damping element (3) and the radial bearing (4) are arranged in a coincident radial plane.

5. A torsionally elastic coupling according to any of claims 1 to 4, characterised in that the radial bearing (4) is designed as a sliding bearing.

6. A torsionally elastic coupling according to any of claims 1 to 4, characterised in that the radial bearing (4) is designed as a deep groove ball bearing.

7. A torsionally elastic coupling according to any of claims 1 to 5, characterised in that the second ring (2) encloses the leg of the profile of the first ring (1), which leg encloses the second ring (2) radially externally, with an annular projection at a radial spacing, in that the gap formed by the spacing is subdivided by a third ring (8) at least partly into second part-spaces (9, 10) which enclose one another radially and in that a second radial bearing (10) in one second part-space (9) and a second damping element (12) in the other second part-space (10) are provided for torsionally elastic support of the third ring (8).

## Revendications

1. Accouplement élastique rotatif pour des éléments de machine, dans lequel il est prévu sur les éléments de machine deux bagues disposées l'une autour de l'autre avec un espacement radial et, dans l'intervalle créé par l'espacement, il est prévu un élément d'amortissement (3) en caoutchouc et un palier radial (4), qui relient parallèlement entre elles les bagues (1, 2), caractérisé en ce que la première bague (1) a un profil en forme de U, ouvert dans une direction axiale, en ce que le volume libre entouré par le profil est divisé au moins en partie par la seconde bague (2) en des premiers volumes partiels (5, 6), disposés l'un dans l'autre au moins en partie dans une direction radiale et en ce que le palier radial (4) est reçu dans un des volumes partiels (5) et l'élément d'amortissement (3) est reçu dans l'autre volume partiel (6).

2. Accouplement élastique rotatif selon la revendication 1, caractérisé en ce que l'élément d'amortissement (3) relie deux surfaces des deux bagues (1, 2) qui sont espacées axialement l'une de l'autre.

3. Accouplement élastique rotatif selon la revendication 1, caractérisé en ce que l'élément d'amortissement (3) relie deux surfaces des deux bagues (1, 2) qui sont espacées radialement l'une de l'autre.

4. Accouplement élastique rotatif selon la revendication 3, caractérisé en ce que l'élément d'amortissement (5) et le palier radial (4) sont disposés dans un plan radial correspondant.

5. Accouplement élastique rotatif selon une des revendications 1 à 4, caractérisé en ce que le palier radial (4) est agencé comme un coussinet.

6. Accouplement élastique rotatif selon une des revendications 1 à 4, caractérisé en ce que le palier radial (4) est agencé comme un roulement rainuré à billes.

7. Accouplement élastique rotatif selon une des revendications 1 à 5, caractérisé en ce que la seconde bague (2) entoure avec une saillie annulaire et avec espacement radial la branche du profil de la première bague (1) qui l'entoure radialement sur le côté extérieur, en ce que l'intervalle créé par cet espacement est divisé par une troisième bague (8) au moins en partie en des seconds volumes partiels (9, 10), disposés radialement dans l'autre, et en ce qu'il est prévu dans un des seconds volumes partiels (9) un second palier radial (10) et dans l'autre second volume partiel (10) un second élément d'amortissement (12) servant à soutenir, élastiquement en rotation, la troisième bague (8).
